Europäisches Patentamt

European Patent Office

Office européen des brevets

(11) Veröffentlichungsnummer: **0 276 373**
**A2**

# EUROPÄISCHE PATENTANMELDUNG

(21) Anmeldenummer: **87115532.1**

(22) Anmeldetag: **23.10.87**

(51) Int. Cl.4 **H04M 1/72 , H04M 1/02**

(30) Priorität: **29.01.87 DE 8701399 U**

(43) Veröffentlichungstag der Anmeldung:
**03.08.88 Patentblatt 88/31**

(84) Benannte Vertragsstaaten:
**AT BE CH DE ES FR GB GR IT LI LU NL SE**

(71) Anmelder: **ROBERT BOSCH GMBH**
**Postfach 50**
**D-7000 Stuttgart 1(DE)**

(72) Erfinder: **Busch, Fritz, Ing.**
**Gorgasring 24**
**D-1000 Berlin 20(DE)**
Erfinder: **Meissner, Günter, Dipl.-Ing.**
**Trachenbergring 87**
**D-1000 Berlin 44(DE)**
Erfinder: **Löscher, Günter, Dipl.-Ing.**
**Krontal Strasse 82**
**D-1000 Berlin 49(DE)**
Erfinder: **Siegle, Gert, Prof., Dr., Dipl.-Phys.**
**Kirchweg 7**
**D-1000 Berlin 38(DE)**

(74) Vertreter: **Schmidt, Hans-Ekhardt**
**Robert Bosch GmbH Geschäftsbereich**
**Elektronik Patent- und Lizenzabteilung**
**Forckenbeckstrasse 9-13**
**D-1000 Berlin 33(DE)**

(54) **Aufnahmevorrichtung für einen Handapparat eines Schurlosen Telefons.**

(57) Aus einem Basisteil und einem Handapparat bestehende schnurlose Telefone sind überlicherweise derart ausgebildet, daß der Handapparat in einer Mulde des Basisteils abgelegt werden kann. In abgelegtem Zustand werden in dem Handapparat enthaltene Akkumulatoren aus einem Ladegerät des Basisteils über korrespondierende Kontakte an der Mulde und am Handapparat nachgeladen bzw. aufgeladen. Es wird eine separate Aufnahmevorrichtung (20) für den Handapparat (10) vorgeschlagen, die in der einfachsten Ausführungsform lediglich Anschlußmittel (23, 24, 25) für ein externes Ladegerät (31) aufweist und die deshalb wesentlich kleiner als die bekannten Basisapparate ist, die neben dem Ladeteil noch eine Hochfrequenzsende-und -empfangsvorrichtung enthalten.

Fig. 1

## Aufnahmevorrichtung für einen Handapparat eines schnurlosen Telefons

### Stand der Technik

Die Erfindung geht von einer Aufnahmevorrichtung nach der Gattung des Hauptanspruchs aus.

Es sind schnurlose Telefone bekannt (Funkschau, 1986, Heft 8, Seiten 52 bis 54), die einen mit einer Fernmeldedose verbundenen Basisapparat sowie einen mit dem Basisapparat per Funk verbundenen Handapparat aufweisen. Das Gehäuse des Basisapparates enthält eine Vertiefung zum Ablegen des Handapparates, eine Hochfrequenzsende-und -empfangsvorrichtung sowie ein Ladegerät zum Aufladen des Akkumulators des auf dem Basisapparat abgelegten Handapparates und gegebenenfalls eine Aufnahme für einen Reserveakkumulator. Ein Basisapparat mit den vorgenannten Merkmalen ist verhältnismäßig groß. Außerdem muß der Handapparat zum Ablegen und zum Nachladen seines Akkumulators immer zu dem Basisapparat getragen werden.

### Vorteile der Erfindung

Die erfindungsgemäße Aufnahmevorrichtung mit den kennzeichnenden Merkmalen des Hauptanspruchs hat den Vorteil, daß ihre Abmessungen erheblich kleiner als die eines Basisapparates sind. Ein weiterer Vorteil besteht darin, daß der Akkumulator des Handapparates nicht nur mit dem Basisapparat, sondern an einem beliebigen anderen Aufstellungsort der Aufnahmevorrichtung aufgeladen werden kann.

Durch die in den Unteransprüchen aufgeführten Maßnahmen sind vorteilhafte Weiterbildungen und Verbesserungen der in dem Hauptanspruch angegebenen Aufnahmevorrichtung möglich. Besonders vorteilhaft ist eine erfindungsgemäße Aufnahmevorrichtung, bei der das Gehäuse der Aufnahmevorrichtung eine von außen zugängliche Einführöffnung zur Aufnahme eines Reserveakkumulators aufweist, dessen Polklemmen über an der Rückseite der Einführöffnung vorgesehene Kontakte mit dem Ladegerät verbunden ist. Dadurch wird die Aufnahmevorrichtung mit einem Ladegerät kombiniert, so daß zwischen einer Netzsteckdose und der Aufnahmevorrichtung lediglich ein einfaches Netzkabel erforderlich.

### Zeichnung

Ausführungsbeispiele der Erfindung sind in der Zeichnung an Hand mehrerer Figuren dargestellt und in der nachfolgenden Beschreibung näher erläutert. Die Zeichnung zeigt in

Fig. 1 eine perspektivische Ansicht eines Handapparates eines schnurlosen Telefons und einer erfindungsgemäßen Aufnahmevorrichtung für den Handapparat,

Fig. 2 eine Schnittansicht der Aufnahmevorrichtung nach Fig. 1, wobei der Schnitt parallel zur Auflagefläche der Aufnahmevorrichtung verläuft, und eine Ansicht eines Steckernetzteils,

Fig. 3 eine Ansicht ähnlich Fig. 2, wobei die Aufnahmevorrichtung eine die Gegenkontakte tragende Leiterplatte enthält,

Fig. 4 eine Schnittansicht der Aufnahmevorrichtung mit eingebautem Netzteil und Aufnahmeöffnung für einen Reserveakkumulator und

Fig. 5 eine Schnittansicht wie in Fig. 3, wobei die Leiterplatte ein Netzteil trägt.

### Beschreibung der Erfindung

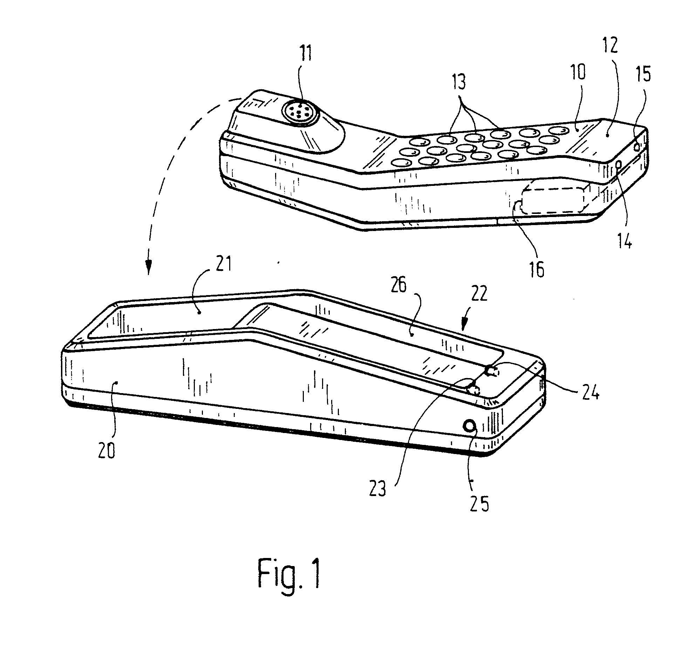

In Fig. 1 ist mit 10 ein Handapparat eines schnurlosen Telefons bezeichnet. Der Handapparat weist an einem Ende Schallaustrittsöffnungen 11 für einen in dem Handapparat enthaltenen Hörer und am anderen Ende mindestens eine Schalleintrittsöffnung 12 für ein Mikrofon auf. Im mittleren Bereich des Handapparates 10 ist eine Tastatur 13 angeordnet. An dem mikrofonseitigen Ende des Handapparates befinden sich zwei Ladekontakte 14, 15.

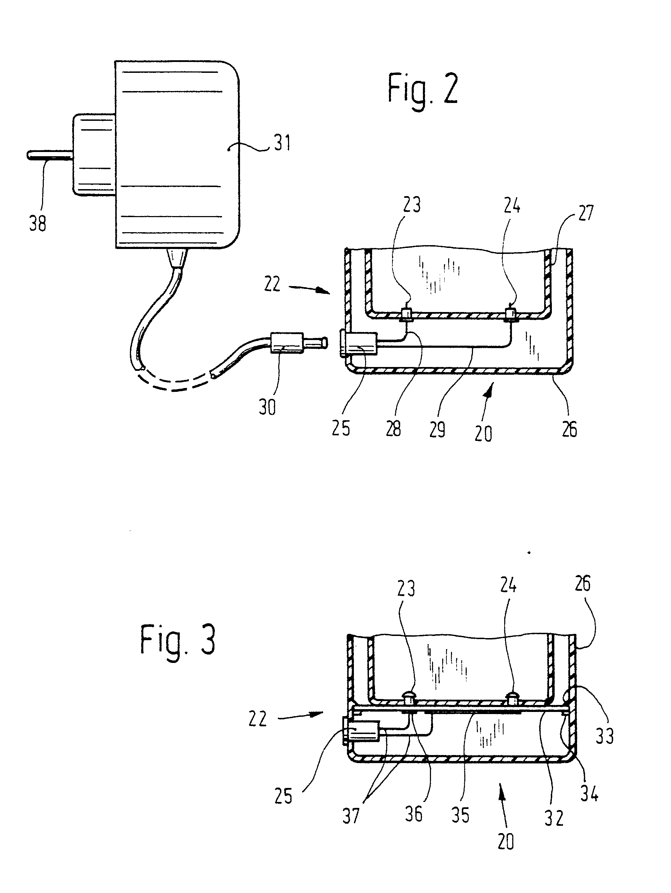

Eine zur Aufnahme des Handapparates bestimmte erfindungsgemäße Aufnahmevorrichtung 20 weist eine der Form des Handapparates 10 angepaßte Vertiefung 21 auf. in die am unteren Ende 22 der Aufnahmevorrichtung 20 zwei vorzugsweise federnde Gegenkontakte 23, 24 hineinragen. Die Gegenkontakte korrespondieren bei auf die Aufnahmevorrichtung aufgelegtem Handapparat mit den Ladekontakten 14, 15. Die Aufnahmevorrichtung 20 enthält an ihrem unteren Ende 22 ein seitliches Anschlußelement 25. Das Gehäuse 26 der Aufnahmevorrichtung 20 ist dünnwandig ausgeführt und aus einem schlagfesten Kunststoff hergestellt. Nach Fig. 2 sind die in einer Innenwand 27 des Gehäuses 26 befestigten Gegenkontakte 23, 24 über Leitungen 28, 29 mit dem Anschlußelement 25 verbunden. Das Anschlußelement ist vorzugsweise ein Einbaustecker, in den eine Steckbuchse 30 eines Steckernetzteils 31 paßt.

Ist das Steckernetzteil 31 mit seinen Steckerstiften 38 in eine Netzsteckdose für zum Beispiel 220 V oder 110 V eingesteckt und der Handapparat 10 auf der Aufnahmevorrichtung abgelegt, so lädt der von dem Steckernetzteil 31 gelieferte Ladegleichstrom über die Gegenkontakte 23, 24 und die Kontakte 14, 15 des Handapparates den in dem Handapparat vorhandenen Akkumulator 16 auf bzw. nach.

In Fig. 3 ist eine alternative Ausführungsform der Verbindung zwischen den Gegenkontakten 23, 24 und der Anschlußbuchse 25 gezeigt. Danach ist eine Leiterplatte 32 innerhalb des unteren Endes der Aufnahmevorrichtung 20 mittels Rastnasen 33, 34 befestigt. Die Leiterplatte 32 trägt auf ihrer Oberseite die Gegenkontakte 23, 24 und auf der Unterseite Leitungsbahnen 35, 36, die zum Beispiel über Leitungsstücke 37 mit der Anschlußbuchse 25 in Verbindung stehen. An die Stelle der Rastverbindung zwischen Leiterplatte und Gehäuse 26 kann gegebenenfalls eine Schraubverbindung oder Klebverbindung treten.

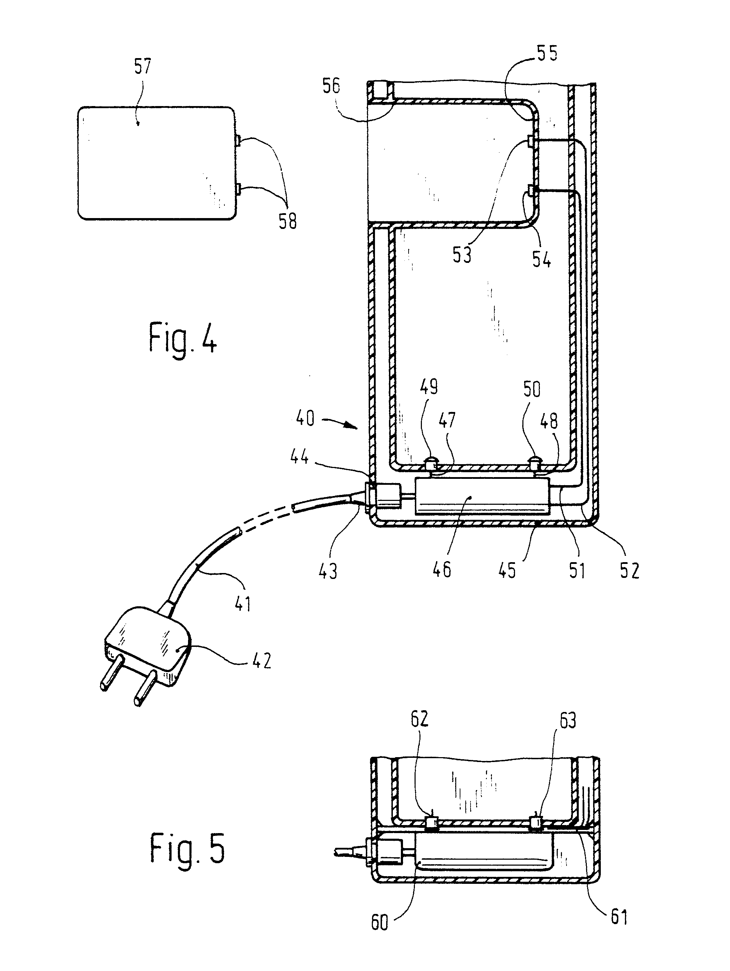

In Fig. 4 ist ein Ausführungsbeispiel einer Aufnahmevorrichtung 40 gezeigt, die ein festes Anschlußkabel 41 mit einem Netzstecker 42 trägt. Das dem Netzstecker 42 abgewandte Ende des Anschlußkabels ist mittels einer Kabeldurchführung 43, die in einer Öffnung 44 des Gehäuses 45 befestigt ist, in das Gehäuse eingeführt und darin mit einem Netzteil 46 verbunden. Ein erstes Paar ausgangsseitiger Anschlußleitungen 47, 48 ist mit Gegenkontakten 49, 50 verbunden und ein zweites Paar von Anschlußleitungen 51, 52 mit Kontakten 53, 54, die sich an einer Rückwand 55 einer seitlichen Einführöffnung 56 der Aufnahmevorrichtung 40 befinden. Die Einführöffnung 56 dient zur Aufnahme eines Reserveakkumulators 57, dessen Polklemmen mit 58 bezeichnet sind.

Nach Fig. 5 ist ein Netzteil 60 auf einer Leiterplatte 61 befestigt, die Gegenkontakte 60, 61 trägt.

## Ansprüche

1. Aufnahmevorrichtung für einen Handapparat eines schnurlosen Telefons, die an ihrer Oberseite mit einer der Außenform des Handapparates angepaßten Vertiefung versehen ist, welche an ihrem dem einspracheseitigen Ende des Handapparates entsprechenden Ende elektrische Gegenkontakte aufweist, denen bei aufgelegtem Handapparat entsprechende Kontakte des Handapparates gegenüberstehen, dadurch gekennzeichnet, daß die Kontakte (14, 15) des Handapparates (10) zwei Ladekontakte sind und daß zwei entsprechende Gegenkontakte (23, 24) der keine Bauteile für die Funkübertragung enthaltenden Aufnahmevorrichtung (20) mit einem von der Außenseite der Aufnahmevorrichtung zugänglichen Anschlußelement (25) oder mit einem aus der Aufnahmevorrichtung herausgeführten Anschlußkabel (41) verbunden sind.

2. Aufnahmevorrichtung nach Anspruch 1, dadurch gekennzeichnet, daß die Aufnahmevorrichtung (20) ein dünnwandiges Gehäuse (26) aus einem schlagfesten Kunststoff ist.

3. Aufnahmevorrichtung nach Anspruch 1 oder 2, dadurch gekennzeichnet, daß in dem Gehäuse (26) eine die Gegenkontakte (23, 24) tragende Leiterplatte (32) befestigt ist, deren Leiterbahnen (35, 36) die Gegenkontakte mit der Anschlußbuchse (25) verbinden.

4. Aufnahmevorrichtung nach Anspruch 3, dadurch gekennzeichnet, daß die Leiterplatte (32) mittels Rastelemente (33, 34) oder Schrauben oder einer Klebverbindung in dem Gehäuse (26) befestigt ist.

5. Aufnahmevorrichtung nach Anspruch 1 oder 2, dadurch gekennzeichnet, daß die Kontakte (14, 15) Flächenkontakte und die Gegenkontakte (23, 24) federnde Kontakte sind.

6. Ausnahmevorrichtung nach Anspruch 1 oder einem der folgenden, dadurch gekennzeichnet, daß in dem Gehäuse (45) der Aufnahmevorrichtung (40) ein Ladegerät (46) untergebracht ist, das eingangsseitig mit einem nach außen geführten Anschlußkabel (41) und ausgangsseitig mit den Gegenkontakten (49, 50) verbunden ist.

7. Aufnahmevorrichtung nach einem der Ansprüche 1 bis 6, dadurch gekennzeichnet, daß das Gehäuse (46) der Aufnahmevorrichtung (40) eine von außen zugängliche Einführöffnung (56) zur Aufnahme eines Reserveakkumulators (57) aufweist. dessen Polklemmen (58) über an der Rückseite (55) der Einföhröffnung vorgesehene Kontakte (53, 54) mit dem Ladegerät (46) verbunden sind.

8. Aufnahmevorrichtung nach Anspruch 6 oder 7, dadurch gekennzeichnet, daß das Ladegerät (60) auf einer Leiterplatte (61) angeordnet ist, die die Gegenkontakte (62, 63) trägt.

9. Aufnahmevorrichtung nach einem der Ansprüche 1 oder 3, dadurch gekennzeichnet, daß das Anschlußelement (25) mit einem entsprechenden Steckelement (30) eines Steckernetzteils (31) verbindbar ist, dessen Steckanschlüsse (38) mit einer Netzsteckdose verbindbar sind.

0 276 373

Fig. 1

Fig. 2

38

31

22

30

23

24

27

25

28

29

20

26

Fig. 3

23

24

26

22

25

37

36

35

32

34

33

20

0 276 373

Fig. 4

Fig. 5